# EUROPÄISCHE PATENTSCHRIFT

(11) **EP 1 435 373 B1**
(45) Veröffentlichungstag und Bekanntmachung des Hinweises auf die Patenterteilung: **17.09.2008**
(21) Anmeldenummer: 04101413.5
(22) Anmeldetag: 26.10.2000
(51) Int. Cl.: C08K 9/06, C08L 77/00

(54) **Organosilan- und/oder Organosiloxan-haltige Mittel für gefülltes Polyamid**
Organosilanes and/or Organosiloxanes for filled polyamides
Organosilanes et/ou organosiloxanes pour des polyamides remplis

(30) Priorität: 22.12.1999 DE 19961972
(43) Veröffentlichungstag der Anmeldung: 07.07.2004
(62) Teilanmeldung aus: 00123195.0
(73) Patentinhaber: Evonik Degussa GmbH, 45128 Essen (DE)
(72) Erfinder: Mack, Helmut Dr., 79618, Rheinfelden (DE); Barfurth, Dieter, 79618, Rheinfelden (DE); Edelmann, Roland, 79618, Rheinfelden (DE); Frings, Albert-Johannes Dr., 50321, Brühl (DE); Horn, Michael Dr., 79618, Rheinfelden (DE); Jenkner, Peter Dr., 79618, Rheinfelden (DE); Monkiewicz, Jaroslaw Dr., 79618, Rheinfelden (DE); Schlosser, Thomas Dr., 79594, Inzlingen (DE); Standke, Burkhard Dr., 79540, Lörrach (DE)

(56) Entgegenhaltungen:
- EP-A- 0 342 788
- EP-A- 0 382 370
- EP-A- 0 953 591
- US-A- 3 846 367
- US-A- 4 740 538
- US-A- 5 629 400

## Beschreibung

Die vorliegende Erfindung betrifft Organosilan- und/oder Organosiloxan-haltige Mittel für die Modifizierung der Oberfläche von Füllstoffen einschließlich deren Verwendung zur Herstellung gefüllter Polyamid-Compounds. Ferner betrifft die vorliegende Erfindung oberflächenmodifizierte Füllstoffe, hiermit gefüllte Polyamide und Artikel, die hierauf basieren.

Es ist bekannt, Füllstoffe in Polymere einzuarbeiten. Ein Beweggrund hierfür ist die Kostenersparnis. Ein Teil des teuren Polymers kann durch preisgünstigen Extenderfüllstoff ersetzt werden. Ein weiterer Grund ist die gezielte Modifizierung von mechanischen Eigenschaften des Polymers. Der Füllstoff wird dann zu einem funktionellen Füllstoff. Die mechanischen Eigenschaften, wie Zugfestigkeit und Biegefestigkeit, von z. B. gefüllten Polyamid-Compounds (nachfolgend PA-Compound genannt) können so nachhaltig verbessert werden.

Zur Erzielung höherer Füllgrade werden seit langem Aminosilane, wie z. B. DYNASYLAN^{®} AMEO, eingesetzt (US 3 843 591, US 3 846 367, US 4 740 538, EP 0 342 788 A1, EP 0 382 370 A1, EP 0 953 591 A1, EP 0 136 540 B1). Nachteilig ist die schlechte Zähigkeit eines unter Verwendung von einem Aminopropyltrialkoxysilan hergestellten PA-Compound. Ein typisches PA-Compound enthält zwei völlig unterschiedliche Basiskomponenten: ein anorganisches Mineral sowie ein organisches Polymer. Das anorganische Mineral ist im Allgemeinen hydrophil und verfügt über einen ionischen Aufbau. Das organische Polymer ist üblicherweise eher hydrophob und hat einen kovalenten Aufbau. Beide Basiskomponenten haben unterschiedliche Ausdehnungskoeffizienten, Oberflächenspannungen, Biegefestigkeiten usw. Die größte Inkompatibilität liegt an der Grenzfläche der anorganischen und organischen Komponenten vor. Dies ist üblicherweise die Schwachstelle eines gefüllten PA-Compounds. Eine Modifizierung der Grenzfläche mit Aminoalkoxysilanen führt zu einer Haftbrücke und damit zu einer Erhöhung der Festigkeit des PA-Compounds. Obwohl viele mechanische Eigenschaften durch das Aminosilan verbessert werden, trifft dies nicht für Schlagzähigkeiteigenschaften zu.

Aus der deutschen Patentanmeldung 199 08 636.2 sind wasserbasierende Zusammensetzungen spezieller Amino-funktioneller Siliciumverbindungen, unter anderem sogenannte "Bis-Aminosilane", zu entnehmen, die man beispielsweise für die Modifizierung von Glas- und Mineralfaseroberflächen sowie für die Oberflächenmodifizierung und Behandlung von Pigmenten einsetzen kann.

EP 0 518 057 B1 offenbart Gemische Vinyl-/alkyl-/alkoxygruppen-haltiger Siloxane, die als Vernetzungsmittel für thermoplastische Polyolefine verwendet werden. Gemische Aminopropyl-/alkoxy-/alkyl-funktioneller Siloxan-Oligomerer gehen aus der deutschen Patentanmeldung 198 49 308.8 hervor, wobei die Gemische unter anderem als Haftvermittler in gefüllten thermoplastischen Compounds, bei der Beschichtung von Glasfasern sowie für die Silanisierung von Füllstoffen und Pigmenten Anwendung finden .

Den europäischen Patentanmeldungen EP 0 716 127 A2, EP 0 716 128 A2 und EP 0 832 911 A1 sind wasserbasierende Organopolysiloxan-haltige Zusammensetzungen zu entnehmen, die im Wesentlichen durch Mischen wasserlöslicher Aminoalkylalkoxysilane, gegebenenfalls Glycidether- sowie Methacryloxyalkylalkoxysilanen mit nicht wasserlöslichen Alkylsilanen und anschließender säurekatalysierter Hydrolyse bzw. Cokondensation unter Entfernen des Hydrolysealkohols erhältlich sind. Auch solche Zusammensetzungen können für die Beschichtung von Glasfasern sowie für die Silanisierung von Füllstoffen und Pigmenten verwendet werden.

Die deutsche Patentanmeldung 198 18 923.0 betrifft stabile Zusammensetzungen wasserlöslicher Amino- und Alkenyl-funktioneller Organosiloxane, deren Herstellung und Verwendung zur Modifizierung der Eigenschaften von Pigmenten und Füllstoffen, wie Aluminiumoxid, Magnesiumoxid, Kieselsäure, Kreide, Gips, Schwerspat, Glasfasern, Glasperlen, Ruß, Wollastonit, Kaolin, Glimmer, Talkum - um nur einige zu nennen.

Darüber hinaus lehrt die deutsche Patentanmeldung 198 18 924.9 ein Verfahren zur Herstellung oberflächenmodifizierter Füllstoffe durch eine Behandlung mit einer Organosiloxan-haltigen Zusammensetzung, wobei das Organosiloxan neben OH-Gruppen mindestens eine Amino-funktionelle Gruppe und gegebenenfalls weitere funktionelle Gruppen aus der Reihe Alkyl, Halogenalkyl, Alkenyl, Glycidyletheralkyl, Acryloxyalkyl sowie Methacryloxyalkyl trägt. Solche Füllstoffe finden Anwendung in Klebstoffen, Dichtungsmassen, Polymermassen, Farben und Lacken.

Die deutsche Patentanmeldung 198 30 128.6 betrifft Flammschutzmittel, deren Oberfläche durch eine Behandlung mit Organosilanen bzw. Organosiloxanen modifiziert ist. Solche Flammschutzmittel finden unter anderem Anwendung in Polyamiden.

Aus DE 199 29 021.0 geht die Verwendung funktioneller Organylorganyloxysilane oder deren Cokondensaten auf Trägerstoffen in Kabelcompounds hervor.

Der Erfindung lag nun die Aufgabe zugrunde, alternative Aminoorganosilan-Verbindungen zur Behandlung von Füllstoffen, welche bei der Herstellung von gefülltem Polyamid eingesetzt werden, bereitzustellen.

Die gestellte Aufgabe wird erfindungsgemäß entsprechend den Angaben der Patentansprüche gelöst.

Es wurde gefunden, dass insbesondere Füllstoffe, die mit einem Mittel gemäß Anspruch 1 behandelt sind, welches unten näher spezifiziert ist, gute Festigkeitseigenschaften bei gleichzeitig guten Schlagzähigkeitseigenschaften in gefüllten, insbesondere kaolingefüllten, PA-Compounds liefern.

Die gleichzeitige Modifizierung der Grenzfläche zwischen Füllstoff und Polyamid (PA) mit einer Komponente mit haftvermittelnden Eigenschaften, beispielsweise einem Aminosilan, sowie einer Komponente mit Schmiermitteleigenschaften, beispielsweise einem Alkylsilan, einem Polyethersilan oder einem Wachs auf der Grundlage von Polyethylen (PE), Polypropylen oder Silikon, bewirkt in überraschender und vorteilhafter Weise eine gute bzw. verbesserte Schlagzähigkeit unter weitgehender Beibehaltung guter Festigkeitseigenschaften des gefüllten Polyamids.

Eine agglomeratfreie Dispersion des Füllstoffs in der PA-Polymermatrix ist essentiell und wird bei Einsatz von Füllstoffen, die mit einem der vorliegenden Mittel behandelt wurden, in ausgezeichneter Weise erreicht.

Darüber hinaus weisen die besagten PA-Compounds ein verbessertes rheologisches Verhalten auf und lassen sich so leichter compoundieren. Dies bedeutet für den Compounder eine zusätzliche Kostenerspamis.

Gegenstand der vorliegenden Erfindung ist somit ein Organosilan-haltiges Mittel für die Modifizierung der Oberfläche von Füllstoffen, welche bei der Herstellung von gefülltem Polyamid eingesetzt werden, wobei das Mittel mindestens ein Bis- oder Tris-Aminosilan aus der Reihe (H₅C₂O)₃Si(CH₂)₃NH(CH₂)₃Si(OC₂H₅)₃, (H₃CO)₃Si(CH₂)₃NH(CH₂)₃Si(OCH₃)₃ und [(H₃CO)₃Si(CH₂)₃]₃N enthält.

Bevorzugt kann das vorliegende Mittel mindestens eine Amino-funktionelle Siliciumverbindung der allgemeinen Formel I

R-NH-(CH₂)₃-Si(CH₃)ₓ(Z)₃₋ₓ (I),

worin die Gruppen Z gleich oder verschieden sind und Z eine Alkoxygruppe mit 1 bis 3 C-Atomen oder eine Hydroxygruppe oder ein Chloratom bedeutet, x gleich 0 oder 1 ist und R eine lineare oder verzeigte Alkylgruppe mit 1 bis 20 C-Atomen, eine Cycloalkylgruppe mit 5 bis 12 C-Atomen oder eine Arylgruppe mit 6 bis 12 C-Atomen bedeutet, vorzugsweise 3-[N-Butylamino]propyltrimethoxysilan, 3-[N-Butylamino]-propyltriethoxysilan, 3-[N-Cyclohexylamino]propyltrimethoxysilan, und mindestens ein so genanntes "Bis-Aminosilan", vorzugsweise "Bis-AMEO": [(H₅C₂O)₃Si(CH₂)₃NH(CH₂)₃Si(OC₂H₅)₃] oder "Bis-AMMO": [(H₃CO)₃Si(CH₂)₃NH(CH₂)₃Si(OCH₃)₃], oder mindestens ein tertiäres Aminosilan, wie "Tris-AMEO": [(H₃CO)₃Si(CH₂)₃]₃N, oder eine Mischung aus primären und sekundären und/oder tertiären Aminosilanen und/oder Aminosiloxanen, welche durch Hydrolyse, Kondensation oder Cokondensation von primären, sekundären und/oder tertiären Aminosilanen erhältlich sind, wobei der durchschnittliche Oligomerisierungsgrad der Aminosiloxane zwischen 2 und 20 liegt, enthalten.

Ferner genügt eine Amino-funktionelle Siliciumverbindung der allgemeinen Formel II

R-Si(CH₃)ₓ(Z)₃₋ₓ (II),

worin die Gruppen Z gleich oder verschieden sind und Z eine Alkoxygruppe mit 1 bis 3 C-Atomen oder eine Hydroxygruppe oder ein Chloratom bedeutet, x gleich 0 oder 1 ist und R eine Aminogruppe der Formel H₂N-[(CH₂)₂NH]_{y}-(CH₂)₃- mit y gleich 0 oder 1 oder 2 darstellt, vorzugsweise 3-Aminopropyltrimethoxysilan (AMMO): [H₂N(CH₂)₃Si(OCH₃)₃], 3-Aminopropyltriethoxysilan (AMEO): [H₂N(CH₂)₃Si(OC₂H₅)₃], N-Aminoethyl-3-aminopropyltrimethoxysilan (DAMO): [H₂N(CH₂)₂NH(CH₂)₃Si(OCH₃)₃] sowie N-Aminoethyl-N'-aminoethyl-3-aminopropyltrimethoxysilan (TRIAMO): [H₂N(CH₂)₂NH(CH₂)₂NH(CH₂)₃Si(OCH₃)₃].

Eine besondere Reihe sekundärer Amine stellen die so genannten Bis-Aminosilane, beispielsweise Bis-AMMO und Bis-AMEO, sowie die N-alkylierten Aminosilane der allgemeinen Formel I dar, vorzugsweise 3-(N-Butylamino)-propyltrimethoxysilan (DYNASYLAN^{®} 1189).

Bis-Aminosilane im Sinne der vorliegenden Erfindung sind auch solche, wie sie aus DE 199 08 636.2 zu entnehmen sind. Ferner ist hieraus auch eine Methode zur Hydrolyse, Kondensation bzw. Cokondensation von primären und sekundären Aminosilanen zu entnehmen. Aus DE 199 08 636.2 gehen auch Beispiele für Aminosiloxane hervor; es wird ausdrücklich darauf hingewiesen, dass der gesamte Inhalt dieser oder der nachfolgend aufgeführten Zitatstellen gleichzeitig als Offenbarung der vorliegenden Anmeldung zu sehen sind.

Als primäre Aminosilane eignen sich für die vorliegende Erfindung beispielsweise 3-Aminopropyltrimethoxysilan (AMMO), 3-Aminopropyltriethoxysilan (AMEO), N-Aminoethyl-3-aminopropyltrimethoxysilan (DAMO).

Ferner wird als Beispiel für ein tertiäres Aminosilan [(H₃CO)₃Si(CH₂)₃]₃N (Tris-AMEO) angeführt.

Mischungen aus primären und sekundären und/oder tertiären Aminosilanen und/oder Aminosiloxanen kann man im Allgemeinen durch jeweiliges Zusammengeben der Einzelkomponenten unter guter Durchmischung herstellen.

Vorzugsweise enthalten die vorliegenden Mittel mindestens ein Aminosilan der allgemeinen Formel II und mindestens ein sekundäres Aminosilan. Besonders bevorzugt sind Mittel mit einem Gehalt an AMEO oder AMMO und > 0 bis < 100 Gew.-% Bis-AMEO oder Bis-AMMO als weitere Wirkstoffkomponente.

Beispiele für weitere Siloxane im Sinne der vorliegenden Erfindung, welche im Allgemeinen durch Hydrolyse, Kondensation oder Cokondensation von Verbindungen der Formeln I bzw. II erhältlich sind, einschließlich Methoden zur Herstellung entsprechender Siloxane können insbesondere den europäischen Schutzrechten EP 0 518 057 B1, EP 0 716 127 A2, EP 0 716 128 A2, EP 0 832 911 A1 sowie der deutschen Patentanmeldung 198 49 308.8 entnommen werden. Beispielsweise gehören oligomeres Propyltriethoxysilan (VPS 9892), oligomeres Vinyltrimethoxysilan (DYNASYLAN^{®} 6490) und cooligomeres Alkyl/Vinylsilan (DYNASYLAN^{®} 6598) zu dieser Produktgruppe.

Erfindungsgemäß verwendet man ein erfindungsgemäßes Mittel für die Behandlung von Füllstoffen, wobei diese insbesondere für die Herstellung von PA-Compounds eingesetzt werden.

Im Allgemeinen kann man die Füllstoffe mit einem erfindungsgemäßen Mittel behandeln, indem man die Füllstoffe und das Mittel zusammengibt, gegebenenfalls unter Temperaturerhöhung einwirken lässt und so behandelte Füllstoffe gegebenenfalls nach einer Trennung zusätzlich thermisch nachbehandelt. Man kann insbesondere so verfahren, wie es DE 198 18 924.9 zu entnehmen ist, vgl. auch DE 198 18 923.0 sowie DE 198 30 128.6.

Bevorzugt verwendet man als Füllstoff bei der vorliegenden Erfindung Glasfaser, Glasperlen, Wollastonit, kalziniertes Kaolin, Glimmer, Talkum, Magnesiumhydroxid, Melamincyanurat, Montmorillonit und Nanocomsites.

Gegenstand der vorliegenden Erfindung ist somit die Verwendung eines erfindungsgemäßen Mittels für die Behandlung von Füllstoffen, insbesondere solche, die bei der Herstellung von gefülltem Polyamid eingesetzt werden.

Ferner sind auch erfindungsgemäß erhältliche, oberflächenmodifizierte Füllstoffe Gegenstand der vorliegenden Erfindung.

Darüber hinaus sind Artikel, die mindestens einen erfindungsgemäß behandelten Füllstoff enthalten, Gegenstand der vorliegenden Erfindung, insbesondere sogenanntes gefülltes Polyamid.

Beispielsweise - aber nicht ausschließlich - kann man bei der vorliegenden Erfindung Polyamide des Typs PA 6 (Poly-ε-Caprolactam), PA 6.6 (Polykondensat aus Hexamethylendiamin und Adipinsäure) oder PA 12 (Poly-12-dodecalactam) verwenden. Ein Beispiel für kommerziell erhältliches PA 6.6 ist die Produktgruppe ZYTEL^{®} von DuPont. Man kann aber auch andere Polyamide mit erfindungsgemäßen Füllstoffen füllen.

Geeigneterweise verwendet man 0,1 bis 70Gew.-%, vorzugsweise 10 bis 40 Gew.-%, eines erfindungsgemäßen Füllstoffs bei der Herstellung eines gefüllten PA-Compounds.

Im Allgemeinen stellt man einen gefüllten PA-Compound durch Vermischen des Polyamids und des gecoateten Füllstoffs in einem Compoundierkneter her. Dazu wird über zwei Dosiervorrichtungen einerseits Polyamid-Granulat und andererseits der Füllstoff so in den auf eine Temperatur oberhalb der Schmelztemperatur des Polyamids aufgeheizten Mischer gegeben, dass der gewünschte Füllgrad eingehalten werden kann. Im Allgemeinen bedeutet Füllgrad das Massenverhältnis zwischen Polyamid und Füllstoff, z. B. bei 60 Gewichtsteilen Polyamid und 40 Gewichtsteilen Füllstoff im Compound ist der Füllgrad 40 %. In der Regel wird das aus dem Mischer-kommende PA-Compound anschließend granuliert und kann z. B. mit einer Spritzgießmaschine zu Halb- oder Fertigfabrikaten verarbeitet werden.

Gebrauchfertige, z. B. durch Spitzgießen hergestellte Artikel sind beispielsweise verschiedenartigste Gehäuse für elektronische Geräte oder Teile für Kraftfahrzeuge, z. B. Radkappen, Ventilatorgehäuse, um nur einige zu nennen.

Die in erfindungsgemäßer Weise erhältlichen gefüllten PA-Compounds zeichnen sich in der Regel sowohl durch eine gute Festigkeit als auch durch eine gute Schlagzähigkeit aus.

Gegenstand der vorliegenden Erfindung sind daher auch erfindungsgemäß gefülltes Polyamid sowie Artikel, die auf einem solchen Polyamid basieren.

Die vorliegende Erfindung wird durch die nachfolgenden Beispiele näher erläutert.

### Beispiel 1

Herstellung der silanisierten Kaolin-Proben (Allgemeine Vorschrift)

In einen Labor-Pflugscharmischer, Typ LÖDIGE M20, mit einem Fassungsvermögen von ca. 20 Litern werden 7000 g kalziniertes Kaolin (POLESTAR 200 R, Lieferant ECC/GB) gegeben und der Mischer in Gang gesetzt. Die Drehzahl des Mischwerkzeugs wird auf 400 Umdrehungen pro Minute eingestellt und das Kaolin über den Doppelmantel des Mischgefäßes mittels Thermostat und Wärmeträgeröl auf ca. 80 °C temperiert. Nach ca. 30 Minuten Vorwärmen wird über die Dosiervorrichtung des Mischers das Silan bzw. das Silangemisch zudosiert: ca. 35 g pro Minute, insgesamt 70 g. Wenn die gesamte Silan-Menge zugegeben ist, wird nach Abstellen der Wärmezufuhr noch insgesamt 120 Minuten gemischt, davon 90 Minuten unter vermindertem Druck.

### Beispiel 2

### Herstellung der Polyamid-Kaolin-Compounds

In einen Co-Kneter, Fabrikat BUSS, Typ PR46-11 D, wird über den ersten Einzug das Polyamid (ZYTEL 101 L, Hersteller DuPont, 12 Stunden bei 80 °C getrocknet) mittels einer Schnecke mit 6,5 kg/h eindosiert. Über den zweiten Einzug wird mit einer Doppelschnecke das silanisierte Kaolin in einer Menge von 4,33 kg/h zugegeben. Das Verhältnis Polyamid zu Kaolin beträgt dadurch 60 : 40, d. h. der Füllgrad ist 40 %. Die Drehzahl des Kneters beträgt ca. 150 Umdrehungen pro Minute, die Zylindertemperatur 290 °C, der Durchsatz ca. 15 kg/h. Der Füllgrad wird durch die Bestimmung des Aschegehalts kontrolliert.

Das fertige Compound wird granuliert und zur Herstellung von Prüfkörpern mit einer Spritzgießmaschine, Fabrikat ENGEL, Typ ES 240/65, weiterverarbeitet. Der Spritzguss erfolgt bei einem Druck von 2 150 bar und einer Temperatur von ca. 267 °C. Gespritzt werden Normzugstäbe (Mehrzweckstäbe Nr. 84).

| Ansatz-Nr. | Polyamid und Kaolin, gecoatet mit 1 Gew.-% Silan/Siloxan (bezogen auf Kaolin) |
|---|---|
| 1¹⁾ | γ-Aminopropyltrimethoxysilan, (DYNASYLAN^{®} AMEO) |
| 2¹⁾ | γ-Aminopropyltrimethoxysilan, technische Qualität, (DYNASYLAN^{®} AMEO-T) |
| 3 | 3-(N-Butylamino)-propyltrimethoxysilan, (DYNASYLAN^{®} 1189) |
| 4 | Physikalische Mischung aus 60 Gew.-Teilen DYNASYLAN^{®} AMEO-T und 40 Gew.-Teilen des PTEO-Oligomers VPS 9892 |
| 5 | Physikalische Mischung aus 2 Gew.-Teilen DYNASYLAN^{®} AMEO und 1 Gew.-Teil DYNASYLAN^{®} MTES, (DYNASYLAN^{®} 1291) |
| 6 | Physikalische Mischung aus 2 Gew.-Teilen DYNASYLAN^{®} AMEO-T und 1 Gew.-Teil Polyethersilan DYNASYLAN^{®} 4140 |

| | |
|---|---|
| ¹⁾ Vergleichsbeispiele | |

### Beispiele 3 bis 8

Prüfergebnisse der nach den Beispielen 1 und 2 hergestellten Polyamid-Kaolin-Compounds:

### Beispiel 3

### Bestimmung der Zugfestigkeit nach DIN EN ISO 527

| Ansatz-Nr. | E-Modul nach 24 h 23 °C/50 % rel. Feuchte [N/mm²] | E-Modul in % von Probe 1 (AMEO) | E-Modul nach 7 Tagen Wasserlagerung bei 90 °C [N/mm²] | E-Modul-Abfall in % |
|---|---|---|---|---|
| 1 | 6 050,5 | 100,0 | 1 523,1 | 25,2 |
| 2 | 6 232,1 | 103,0 | 1 634,0 | 26,2 |
| 3 | 6 257,8 | 103,4 | 1 629,1 | 26,0 |
| 4 | 6 388,6 | 105,6 | 1 628,0 | 25,5 |
| 5 | 6 058,4 | 100,1 | 1 636,0 | 27,0 |
| 6 | 6 048,5 | 100,0 | 1 559,8 | 25,8 |

### Beispiel 4

### Bestimmung der Biegefestigkeit nach DIN EN ISO 178

| Ansatz-Nr. | Biegefestigkeit nach 24 h bei 23 °C/50 % rel. Feuchte [kJ/m²] | Biegefestigkeit in % von Probe 1 (AMEO) |
|---|---|---|
| 1 | 131,3 | 100,0 |
| 2 | 127,6 | 97,2 |
| 3 | 127,7 | 97,3 |
| 4 | 124,9 | 95,1 |
| 5 | 132,5 | 100,9 |
| 6 | 126,2 | 96,1 |

### Beispiel 5

### Bestimmung der Schlagzähigkeit nach DIN EN ISO 179 (Charpy) und DIN EN ISO 180 (Izod)

| | Schlagzähigkeit nach DIN EN ISO 179 | |
|---|---|---|
| Ansatz-Nr. | Nach 24 h 23 °C/50 % rel. Feuchte [kJ/m²] | In % von Probe 1 (AMEO) |
| 1 | 38,60 | 100,0 |
| 2 | 32,21 | 83,4 |
| 3 | 41,72 | 108,1 |
| 4 | 42,16 | 109,2 |
| 5 | 37,13 | 96,2 |
| 6 | 47,50 | 123,1 |

| | Schlagzähigkeit nach DIN EN ISO 180 | |
|---|---|---|
| Ansatz-Nr. | Nach 24 h 23 °C/50 % rel. Feuchte [kJ/m²] | In % von Probe 1 (AMEO) |
| 1 | 20,83 | 100,0 |
| 2 | 19,50 | 93,6 |
| 3 | 30,13 | 144,6 |
| 4 | 27,69 | 132,9 |
| 5 | 32,90 | 157,9 |
| 6 | 30,97 | 148,7 |

### Beispiel 6

### Bestimmung der VICAT-Temperaturbeständigkeit nach DIN EN ISO 306

| Ansatz-Nr. | VICAT-Erweichungstemperatur |
|---|---|
| 1 | 261,7 |
| 2 | 261,3 |
| 3 | 260,3 |
| 4 | 259,2 |
| 5 | 260,7 |
| 6 | 261,6 |

### Beispiel 7

### Bestimmung des Volumen-Fließindex MVR nach DIN ISO 1133 bei 275 °C und 5 kg Belastung

| Ansatz-Nr. | MVR in ccm/10 min |
|---|---|
| 1 | 49,17 |
| 2 | 49,43 |
| 3 | 54,27 |
| 4 | 45,62 |
| 5 | 51,41 |
| 6 | 45,99 |

### Zusammenfassung der Prüfergebnisse:

Die Beispiele zeigen, dass erfindungsgemäße Mittel, vgl. die Ansätze 3 bis 5, im Vergleich zur Standard-Oberflächenmodifikation mit DYNASYLAN^{®} AMEO oder AMEO-T, vgl. die Ansätze 1 und 2, eine Verbesserung der Eigenschaften und der Verarbeitbarkeit des so silanisierten Kaolins in Polyamid bewirken.

Das Beispiel 5 zeigt die deutliche Erhöhung der Schlagzähigkeit der Polyamid-Compounds, - vor allem die Erhöhung der Schlagzähigkeit gemäß der Norm DIN EN ISO 180 (Izod-Schlagzähigkeit). Diese Erhöhung der Schlagzähigkeit bedeutet eine Verbesserung der Gebrauchseigenschaften der mit den erfindungsgemäßen Polyamid-Compounds hergestellten Fertigprodukte.

Aus dem Beispiel 7 ist zu entnehmen, dass auch die Verarbeitung der erfindungsgemäßen Polyamid-Compounds durch die etwa 10 % höhere Fließfähigkeit erleichtert wird.

Die Beispiele 3 und 4 zeigen ferner, dass die erfindungsgemäßen oberflächen modifizierten Füllstoffe die Zug- und Biegefestigkeit des Polyamid-Compounds so gut wie nicht beeinflussen.

Auch die thermischen Eigenschaften, hier dargestellt durch die Erweichungstemperatur, werden gemäß Beispiel 6 nicht signifikant durch die erfindungsgemäße Oberflächenmodifikation des Füllstoffs beeinflusst.

## Patentansprüche

1. Organosilan-haltige Mittel für die Modifizierung der Oberfläche von Füllstoffen, welche bei der Herstellung von gefülltem Polyamid eingesetzt werden,
wobei
das Mittel
mindestens ein Bis- oder Tris-Aminosilan aus der Reihe (H₅C₂O)₃Si(CH₂)₃NH(CH₂)₃Si(OC₂H₅)₃, (H₃CO)₃Si(CH₂)₃NH(CH₂)₃Si(OCH₃)₃ und [(H₃CO)₃Si(CH₂)₃]₃N enthält.

2. Mittel nach Anspruch 1
**dadurch gekennzeichnet,**
**dass** das Mittel als weitere Komponenten mindestens ein Aminosilan der allgemeinen Formel II
R-Si(CH₃)ₓ(Z)₃₋ₓ (II),
worin die Gruppen Z gleich oder verschieden sind und Z eine Alkoxygruppe mit 1 bis 3 C-Atomen oder eine Hydroxygruppe oder ein Chloratom bedeutet, x gleich 0 oder 1 ist und R eine Aminogruppe der Formel H₂N-[(CH₂)₂NH]_{y}-(CH₂)₃- mit y gleich 0 oder 1 oder 2 darstellt,
und mindestens ein sekundäres Aminosilan der allgemeinen Formel I
R-NH-(CH₂)₃-Si(CH₃)ₓ(Z)₃₋ₓ (I)
worin die Gruppen Z gleich oder verschieden sind und Z eine Alkoxygruppe mit 1 bis 3 C-Atomen oder eine Hydroxygruppe oder ein Chloratom bedeutet, x gleich 0 oder 1 ist und R eine lineare oder verzweigte Alkylgruppe mit 1 bis 20 C-Atomen, eine Cycloalkylgruppe mit 5 bis 12 C-Atomen oder eine Arylgruppe mit 6 bis 12 C-Atomen darstellt,
enthält.

3. Mittel nach Anspruch 1 oder 2,
**dadurch gekennzeichnet,**
**dass** das Mittel als weitere Komponente mindestens ein Polyethylen-Wachs, ein Polypropylen-Wachs oder ein Silikon-Wachs enthält.

4. Verwendung eines Mittels nach einem der Ansprüche 1 bis 3 für die Behandlung von Füllstoffen.

5. Verwendung nach Anspruch 4 für die Behandlung von Glasfasern, Glasperlen, Wollastonit, Kaolin, Glimmer, Talkum, Magnesiumhydroxid, Melamincyanurat, Montmorillonit.

6. Oberflächenmodifizierter Füllstoff, welcher bei der Herstellung von gefülltem Polyamid eingesetzt wird, wobei der Füllstoff aus der Reihe Glasfasern, Glasperlen, Wollastonit, Kaolin, Glimmer, Talkum, Magnesiumhydroxid, Melamincyanurat und Montmorillonit ausgewählt und mit einem Mittel, das mindestens ein Bis- oder Tris-Aminosilan aus der Reihe (H₅C₂O)₃Si(CH₂)₃NH(CH₂)₃Si(OC₂H₅)₃, (H₃CO)₃Si(CH₂)₃NH(CH₂)₃Si(OCH₃)₃ und [(H₃CO)₃Si(CH₂)₃]N enthält, behandelt ist.

7. Artikel, enthaltend mindestens einen oberflächenmodifizierten Füllstoff gemäß Anspruch 6.

8. Verwendung mindestens eines oberflächenmodifizierten Füllstoffs nach Anspruch 6 für die Herstellung eines gefüllten Polyamids.

9. Gefülltes Polyamid, enthaltend mindestens einen oberflächenmodifizierten Füllstoff gemäß Anspruch 6.

10. Gefülltes Polyamid nach Anspruch 9,
**gekennzeichnet durch**
einen Gehalt an Füllstoff von 0,1 bis 70 Gew.-%.

11. Artikel, enthaltend mindestens ein gefülltes Polyamid nach Anspruch 9 oder 10.

## Claims

1. Organosilane-containing agents for modifying the surface of fillers which are used in preparing filled polyamide,
where
the agent comprises at least one bis- or tris-aminosilane from the group of (H₅C₂O)₃Si(CH₂)₃NH(CH₂)₃Si(OC₂H₅)₃, (H₃CO)₃Si(CH₂)₃NH(CH₂)₃Si(OCH₃)₃ and [(H₃CO)₃Si(CH₂)₃]₃N.

2. Agents according to Claim 1,
**characterized in that**
the agent comprises as further components at least one aminosilane of the general formula II
R-Si(CH₃)ₓ(Z)₃₋ₓ (II)
in which the groups Z are identical or different and Z is an alkoxy group having from 1 to 3 carbon atoms or a hydroxy group or a chlorine atom, x is 0 or 1 and R is an amino group of the formula H₂N-[(CH₂)₂NH]_{y}(CH₂)₃-, where y is 0, 1 or 2,
and at least one secondary aminosilane of the general formula I
R-NH-(CH₂)₃-Si(CH₃)ₓ(Z)₃₋ₓ (I)
in which the groups Z are identical or different and Z is an alkoxy group having from 1 to 3 carbon atoms or a hydroxy group or a chlorine atom, x is 0 or 1 and R is a linear or branched alkyl group having from 1 to 20 carbon atoms, a cycloalkyl group having from 5 to 12 carbon atoms or an aryl group having from 6 to 12 carbon atoms.

3. Agents according to Claim 1 or 2,
**characterized in that**
at least one polyethylene wax, one polypropylene wax or one silicone wax is present as a further component in the agent.

4. Use of an agent according to one of Claims 1 to 3 for treating fillers.

5. Use according to Claim 4 for treating glass fibres, glass beads, wollastonite, kaolin, mica, talc, magnesium hydroxide, melamine cyanurate or montmorillonite.

6. Surface-modified filler which is used in preparing filled polyamide, where the filler has been selected from the group of glass fibres, glass beads, wollastonite, kaolin, mica, talc, magnesium hydroxide, melamine cyanurate and montmorillonite, and has been treated with an agent which comprises at least one bis- or tris-aminosilane from the group of (H₅C₂O)₃Si(CH₂)₃NH(CH₂)₃Si(OC₂H₅)₃, (H₃CO)₃Si(CH₂)₃NH(CH₂)₃Si(OCH₃)₃ and [(H₃CO)₃Si(CH₂)₃]N.

7. Product comprising at least one surface-modified filler according to Claim 6.

8. Use of at least one surface-modified filler according to Claim 6 for preparing a filled polyamide.

9. Filled polyamide comprising at least one surface-modified filler according to Claim 6.

10. Filled polyamide according to Claim 9,
**characterized by**
a filler content of from 0.1 to 70% by weight.

11. Product comprising at least one filled polyamide according to Claim 9 or 10.

## Revendications

1. Agent contenant des organosilanes pour la modification de la surface de charges qui sont utilisées dans la fabrication d'un polyamide chargé, ledit agent
contenant au moins un bis- ou tris-aminosilane de la série (H₅C₂O)₃Si(CH₂)₃NH(CH₂)₃Si(OC₂H₅)₃, (H₃CO)₃Si(CH₂)₃NH(CH₂)₃Si(OCH₃)₃ et [(H₃CO)₃Si(CH₂)₃]₃N.

2. Agent selon la revendication 1,
**caractérisé en ce que,**
l'agent contient en tant que composants supplémentaires au moins un aminosilane de formule générale II
R-Si(CH₃)ₓ(Z)₃₋ₓ (II),
dans laquelle les groupements Z sont identiques ou différents et Z représente un groupement alcoxy ayant de 1 à 3 atomes de carbone ou un groupement hydroxy ou un atome de chlore, x représente 0 ou 1 et R représente un groupement amino de formule H₂N-[(CH₂)₂NH]_{y}-(CH₂)₃-, y représentant 0, 1 ou 2,
et au moins un aminosilane secondaire de formule générale I
R-NH-(CH₂)₃-Si(CH₃)ₓ(Z)₃₋ₓ (I)
dans laquelle les groupements Z sont identiques ou différents et Z représente un groupement alcoxy ayant de 1 à 3 atomes de carbone ou un groupement hydroxy ou un atome de chlore, x représente 0 ou 1 et R représente un groupement alkyle linéaire ou ramifié ayant de 1 à 20 atomes de carbone, un groupement cycloalkyle ayant de 5 à 12 atomes de carbone ou un groupement aryle ayant de 6 à 12 atomes de carbone.

3. Agent selon la revendication 1 ou 2,
**caractérisé en ce que,**
l'agent contient en tant que composant supplémentaire au moins une cire de polyéthylène, une cire de polypropylène ou une cire de silicone.

4. Utilisation d'un agent selon l'une quelconque des revendications 1 à 3 pour le traitement de charges.

5. Utilisation selon la revendication 4 pour le traitement de fibres de verre, de perles de verre, de wollastonite, de kaolin, de mica, de talc, d'hydroxyde de magnésium, de cyanurate de mélamine, de montmorillonite.

6. Charge à surface modifiée qui est utilisée dans la fabrication d'un polyamide chargé, ladite charge étant choisie dans la série comprenant les fibres de verre, les perles de verre, la wollastonite, le kaolin, le mica, le talc, l'hydroxyde de magnésium, le cyanurate de mélamine, la montmorillonite et étant traitée avec un agent qui contient au moins un bis- ou tris-aminosilane de la série (H₅C₂O)₃Si(CH₂)₃NH(CH₂)₃Si(OC₂H₅)₃, (H₃CO)₃Si(CH₂)₃NH(CH₂)₃Si(OCH₃)₃ et [(H₃CO)₃Si(CH₂)₃]₃N.

7. Article contenant au moins une charge à surface modifiée selon la revendication 6.

8. Utilisation d'au moins une charge à surface modifiée selon la revendication 6 pour la fabrication d'un polyamide chargé.

9. Polyamide chargé contenant au moins une charge à surface modifiée selon la revendication 6.

10. Polyamide chargé selon la revendication 9,
**caractérisé par**,
une teneur en charges de 0,1 à 70 % en poids.

11. Article contenant au moins un polyamide chargé selon la revendication 9 ou 10.
